# EUROPEAN PATENT SPECIFICATION

(11) **EP 2 196 497 B1**
(45) Date of publication and mention of the grant of the patent: **23.05.2012**
(21) Application number: 09177747.4
(22) Date of filing: 02.12.2009
(51) Int. Cl.: C08K 7/06, C08K 7/14, C08J 5/18, C08J 3/20

(54) **Carbon and glass fiber reinforced composition**
Mit Kohlenstoff- und Glasfasern verstärkte Zusammensetzung
Composition renforcée par fibre de carbone et fibre de verre

(30) Priority: 10.12.2008 US 331795
(43) Date of publication of application: 16.06.2010
(73) Proprietor: Honda Motor Co., Ltd., Minato-ku Tokyo (JP)
(72) Inventor: Ryan, James P., Raymond, OH 43067-9705 (US)
(74) Representative: Berglund, Magnus

(56) References cited:
- WO-A-2006/135597
- DATABASE WPI Week 200567 Thomson Scientific, London, GB; AN 2005-652011 XP002560977 & JP 2005 239806 A (TORAY IND INC) 8 September 2005 (2005-09-08)

## Description

### FIELD OF THE INVENTION

The present teachings relate to a reinforced composite substrate and more particularly to a carbon and glass fiber reinforced composite substrate.

### DISCUSSION OF THE RELATED ART

Automobile manufacturers are constantly looking for ways to reduce the overall weight of a vehicle without compromising strength, durability and safety issues. Polymer based materials of various types have been used to produce automotive parts, including sheet molding compounds (hereinafter "SMC") with typical specific gravities of about 1.9 which are generally lighter in weight than nominal metal and metal alloy parts having specific gravities of about 7.8.

These polymer based materials can be shaped into body parts that are somewhat lighter than currently used sheet metal parts, while still maintaining acceptable levels of strength and durability. However, with increasing fuel costs and desire to even further reduce vehicle weight, interest has developed in utilizing relatively high cost, high strength, low weight carbon fibers in the SMC to address these needs.

It would be advantageous to find suitable compositions that can be efficiently and cost-effectively manufactured and also exhibit both high strength and low weight to address the need for cost competitive parts that exhibit low weight, high strength and good appearance.

### SUMMARY

The present teachings are directed to a reinforced composite substrate made up of about 50 wt. % resin and about 50 wt. % reinforcing fibers. The reinforcing fibers used in the composite substrate can include carbon fiber and glass fibers that are present in a 40:60 ratio by weight, with the carbon fiber being 12K tow carbon fiber having an average fiber length of about 2.54 cm (one inch).

Also disclosed by the present disclosure is a sheet molding compound including about 50 weight percent reinforcing fibers, which are made up of about 40 weight percent carbon fibers and about 60 weight percent glass fibers, and about 50 weight percent thermosetting resin. The carbon fibers utilized can be 12K tow fiber having an average fiber length of about 2.54 cm (one inch) and the carbon fibers and glass fibers should be randomly distributed within the sheet molding compound. The tensile strength of the presently disclosed sheet molding compound is greater than about 170 MPa, the tensile modulus of the presently disclosed sheet molding compound is greater than about 20 GPa, and the specific gravity of the presently disclosed sheet molding compound is less than about 1.60.

Further disclosed herein is a method of forming a composite structural component by providing glass fibers of about 2.54 cm (1 inch) length, and 12 K tow carbon fibers of about 2.54 cm (1 inch) length, then forming a mat of randomly distributed glass and carbon fibers, and contacting a thermosetting resin with the mat to form a resinated mat. The resinated mat is then compacted to form an uncured sheet, which is subsequently molded and cut to the desired shape and size, before curing to form the composite structural component. The composite structural component made by this method can exhibit a tensile strength greater than about 170 MPa, a tensile modulus greater than about 20 GPa, and a specific gravity less than about 1.60.

### BRIEF DESCRIPTION OF THE DRAWINGS

The accompanying drawings which are included to provide a further understanding of the present disclosure and are incorporated in and constitute a part of this specification, illustrate various embodiments of the present disclosure and together with the detailed description serve to explain the principles of the present disclosure. In the drawings:

Fig. 1 is a graph of the flexural modulus versus weight percent carbon fiber;

Fig. 2 is a graph of the tensile strength versus weight percent carbon fiber, and

Fig. 3 is a schematic diagram of a production method.

### DETAILED DESCRIPTION

The present disclosure teaches a reinforced composite substrate made up of about 50 wt. % resin, and about 50 wt. % reinforcing fibers, wherein the reinforcing fibers can be carbon fiber and glass fibers present in a 40:60 ratio by weight, and the carbon fiber can be 12K tow fiber having an average length of about 2.54 cm (one inch).

The reinforced composite substrate according to the present teachings can exhibit tensile strength greater than about 170 MPa, tensile modulus greater than about 20 GPa, and a specific gravity less than about 1.60.

The resins utilized in the reinforced composite substrate can be selected from the group consisting of a thermoset resin, a vinyl ester resin, a polyester resin, a urethane resin, a phenolic resin, an alkyd resin, an amino resin, an epoxide resin, a silicone resin, and mixtures thereof.

Particularly preferred are thermoset resins. One formulation of interest is a combination of vinyl ester and polyester resins, particularly mixtures containing rigid type vinyl ester components.

The fibers utilized in the presently disclosed reinforced composite substrate can include standard yield glass fiber, and PAN ("polyacrylonitrile") based carbon fiber. The reinforcing fibers can be randomly distributed comprise non-woven fibers. A standard SMC compounding process with resinated carrier sheet feeds both top and bottom with fibers chopped and inputted between the two carrier sheets can be utilized to produce the presently disclosed reinforced composite substrate. However, care must be taken to insure that the distribution of the two fiber types, glass and carbon, is uniform and random throughout the web of fibers.

The reinforced composite substrate can be utilized as a body part for an automobile, for example, a spoiler, a windshield surround, a support unit, a door panel, a hood panel, a trunk panel, a truck bed, a mid-gate assembly part, a roof arch support, or a grill assembly.

A sheet molding compound is also taught by the present disclosure. The sheet molding compound can include about 50 weight percent reinforcing fibers, with the fibers being about 40 weight percent carbon fibers and about 60 weight percent glass fibers, and about 50 weight percent thermosetting resin. The carbon fibers can be 12K tow fibers having an average fiber length of about 2.54 cm (one inch) In the sheet molding compound, the carbon fibers and glass fibers can be randomly distributed within the sheet molding compound, and the tensile strength of the sheet molding compound can be greater than about 170 MPa, the tensile modulus of the sheet molding compound can be greater than about 20 GPa, and the specific gravity of the sheet molding compound can be less than about 1.60.

The thermosetting resin utilized in the sheet molding compound can include at least one member selected from the group consisting of a vinyl ester resin, a polyester resin, a urethane resin, a phenolic resin, an alkyd resin, an amino resin, an epoxide resin, a silicone resin, and mixtures thereof.

The presently disclosed sheet molding compound can include glass fibers such as, standard yield glass fiber. The carbon fibers include in the sheet molding compound can be, for example, PAN based carbon fiber. These reinforcing fibers can be non-woven fibers, although in some cases, woven fibers might be incorporated, depending on the desired properties of the end product, and manufacturing concerns.

Also set forth herein is a method of forming a composite structural component by providing glass fibers of about 2.54 cm (1 inch) length, providing 12 K tow carbon fibers of about 2.54 cm (1 inch) length, and forming them into a mat of randomly distributed glass and carbon fibers. A thermosetting resin can be contacted with the mat to form a resinated mat, which is then compacted to form an uncured sheet. Molding and cutting the uncured sheet to the desired shape and size can then take place, prior to curing the uncured sheet to form the composite structural component. The composite structural component can have a tensile strength greater than about 170 MPa, a tensile modulus greater than about 20 GPa, and a specific gravity less than about 1.60.

In the presently disclosed method, the thermosetting resin can be a resin composition including at least one member selected from the group consisting of a vinyl ester resin, a polyester resin, a urethane resin, a phenolic resin, an alkyd resin, an amino resin, an epoxide resin, a silicone resin, and mixtures thereof. One generally preferred formulation is a combination of vinyl ester and polyester resins, particularly mixtures containing rigid type vinyl ester components.

The taught method can prepare composite structural components made up of about 50 weight percent carbon fibers and glass fibers, and about 50 weight percent thermosetting resin. The carbon fibers and the glass fibers can be present in the composite structural component in a ratio by weight of about 40:60.

In the present method, the carbon fibers can be PAN based carbon fibers, and the glass fibers utilized can include standard yield glass fiber.

The composite structural component produced by the disclosed method can include a body panel for an automobile, for example, a spoiler, a windshield surround, a support unit, a door panel, a hood panel, a trunk panel, a truck bed, a mid-gate assembly part, a roof arch support, or a grill assembly.

It has been found that, within the presently taught method, by controlling the critical factors of the fiber type, fiber concentration, resin type, and resin concentration can provide unexpected results in terms of the physical properties of the resulting composite materials. Specifically, the 40:60 ratio of carbon fibers to glass fibers, within a composition containing a 50:50 weight distribution between fibers and resin, with the carbon fibers being 12K tow of approximately 2.54 cm (one inch) length provides a composite material with the desired tensile modulus, tensile strength and specific gravity characteristics. This selection of composition inputs provides a resulting material with an unexpected combination of properties, that is, high strength characteristics with a low specific gravity.

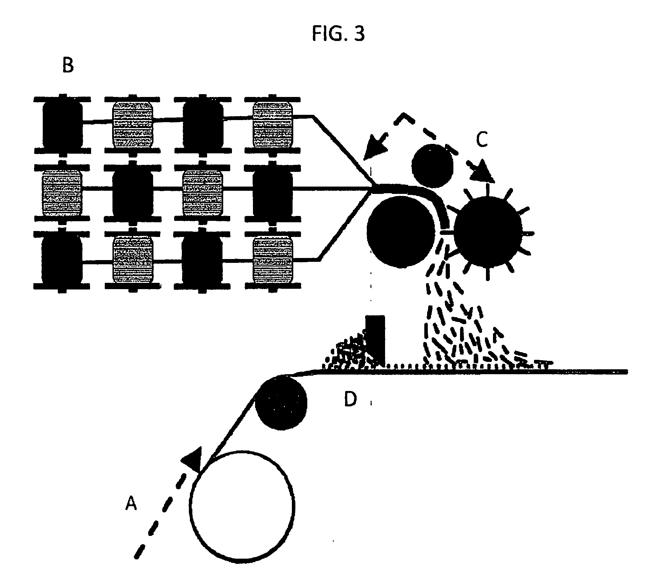

Fig. 3 presents a portion of a modified standard SMC production line for the production of composite substrates according to the present disclosure. A bottom carrier sheet is feed (A) into the line where the resin is applied to the top side by a resin feeder (D). Supplies of carbon fibers and glass fibers (B) are feed into a chopper to be cut into approximately 2.54 cm (1 inch) long strands, and then distributed across the top of the resinated bottom carrier sheet.

Not shown in Fig. 3, is a resinated top carrier sheet being applied to the top side of the distributed carbon and glass fibers, and then compaction of the material to form an uncured SMC sheet.

The simultaneous cutting and addition of both the glass and carbon fibers to the carrier sheet can result in a more uniform distribution of the fibers between themselves and across the carrier sheet.

Line speed during the laying down of the cut fibers can influence the quality of the distribution of both the carbon and glass fibers to provide a fiber mat with few imperfections and even, uniform distribution of resin to the fibers. An additional factors that can influence the quality of the finished sheet is the compaction pressure applied to the uncured SMC sheet prior to curing. One of skill in the art will recognize the factors to be considered in implementing the presently disclosed method, and producing the materials according to the present disclosure.

For increased resistance to weathering and chemical exposure, certain resins are particularly preferred, including, for instance, epoxide resins, polyester resins, vinyl ester resins, and modified mixtures of those resins. For other applications, such as outer body panels, phenolic resins and benzoxazine resins are preferred due to their superior flame resistance and heat-resistance.

One suitable resin is a toughened vinyl ester resin-based composition available from Quantum Composite of Bay City, Michigan under the brand name AMC-8590.

Glass fiber refers herein to fibrous glass known variously as E-glass, C-glass, S-glass, and which fibers are primarily composed of silicon dioxide. Suitable fiber diameters in the range of approximately 5 to 20 µm are usually acceptable in the present method and compositions. Typically, glass fibers having a weight of 20 g/m² to 400 g/m² are suitable.

The tensile modulus and the tensile strength of the cured structural component can be measured according to the procedures set forth in the ASTM D-638 test protocol. Both the flexural strength and flexural modulus of the cured structural component can be measured according to the procedures set forth in the ASTM D-790 test protocol. The specific gravity of the materials can be measured according to the procedures set forth in the ASTM D-792 test protocol.

### EXAMPLES

### Experimental Procedure

Using a vinyl ester/polyester 50:50 blend, nine different samples were prepared using varying amounts of resin to reinforcing fibers, and also varying ratios of glass fibers and carbon fibers as reinforcing fibers, as set forth in Table 1 below. The glass fibers were standard 2.54 cm (one inch) long glass fibers, while the carbon fibers were 12K tow 2.54 cm (one inch) long fibers.

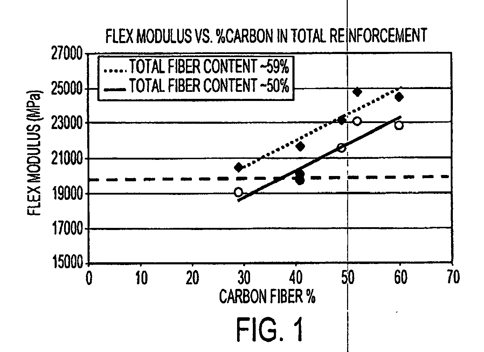

Cured specimens of the prepared samples were tested for flexural modulus according to ASTM D-790 test protocol. The modulus versus percentage of carbon fiber present in the composition results are plotted in Fig. 1.

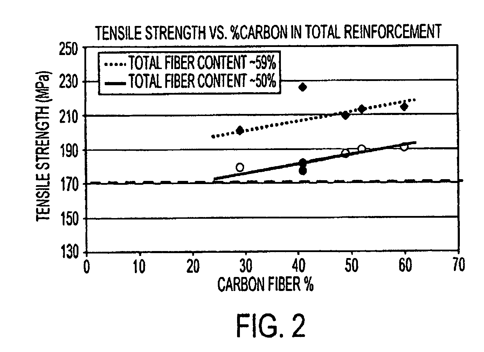

Cured specimens of the prepared samples were tested for tensile strength according to ASTM D-638 test protocol. The tensile strength versus percentage of carbon fiber present in the composition results are plotted in Fig. 2.

The results illustrate that compositions containing about 50 wt. % resin and about 50 wt. % reinforcing fibers, with the reinforcing fibers being composed of carbon fiber and glass fibers present in a 40:60 ratio by weight unexpectedly simultaneously fulfill specific gravity, flexural modulus, and tensile strength requirements.

Figs. 1 and 2 present testing results from the first seven formulations listed in Table 1. Filled data points represent actual testing data, and empty data points are estimates based on results with similar formulations at different specific gravities.

All publications, articles, papers, patents, patent publications, and other references cited herein are hereby incorporated herein in their entireties for all purposes.

Although the foregoing description is directed to the preferred embodiments of the present teachings, it is noted that other variations and modifications will be apparent to those skilled in the art, and which may be made without departing from the spirit or scope of the present teachings.

The examples are presented to provide a more complete understanding of the present teachings. The specific techniques, conditions, materials, and reported data set forth to illustrate the principles of the principles of the present teachings are exemplary and should not be construed as limiting the scope of the present teachings.

The foregoing detailed description of the various embodiments of the present teachings has been provided for the purposes of illustration and description. It is not intended to be exhaustive or to limit the present teachings to the precise embodiments disclosed. Many modifications and variations will be apparent to practitioners skilled in this art. The embodiments were chosen and described in order to best explain the principles of the present teachings and their practical application, thereby enabling others skilled in the art to understand the present teachings for various embodiments and with various modifications as are suited to the particular use contemplated. It is intended that the scope of the present teachings be defined by the claims and their equivalents.

**TABLE 1**

| **ID** | **Reinforcement Ratio (CF/GF)** | **% Fiber by Weight** | | | **Specific Gravity** |
|---|---|---|---|---|---|
| | | CF | GF | Total | |
| 1-A | 29:71 | 17 | 42 | 59 | 1.70 |
| 1-B | 41:59 | 21 | 30 | 51 | 1.59 |
| 1-C | 41:59 | 21 | 29 | 50 | 1.58 |
| 1-D | 41:59 | 24 | 34 | 58 | 1.66 |
| 1-E | 49:51 | 28 | 29 | 57 | 1.66 |
| 1-F | 52:48 | 31 | 29 | 60 | 1.71 |
| 1-G | 60:40 | 34 | 23 | 57 | 1.68 |
| 1-H | 50:50 | 26 | 26 | 52 | 1.56 |
| 1-I | 60:40 | 30 | 20 | 50 | 1.52 |

## Claims

1. A reinforced composite substrate comprising
about 50 wt. % thermosetting resin; and
about 50 wt. % reinforcing fibers,
wherein the reinforcing fibers comprise carbon fiber and glass fibers present in a 40:60 ratio by weight, and the carbon fiber comprises 12K tow fiber having an average fiber length of about one inch (2.54 cm).

2. The reinforced composite substrate according to claim 1, wherein the tensile strength of the reinforced composite substrate is greater than about 170 MPa .

3. The reinforced composite substrate according to claim 1 or 2, wherein the tensile modulus of the reinforced composite substrate is greater than about 20 GPa.

4. The reinforced composite substrate according to any of the preceding claims, wherein the specific gravity of the reinforced composite substrate is less than about 1.60.

5. The reinforced composite substrate according to any of the preceding claims, wherein the resin comprises at least one member selected from the group consisting of a thermoset resin, a vinyl ester resin, a polyester resin, a urethane resin, a phenolic resin, an alkyd resin, an amino resin, an epoxide resin, a silicone resin, and mixtures thereof.

6. The reinforced composite substrate according to any of the preceding claims, wherein the glass fiber comprises standard yield glass fiber, the carbon fiber comprises PAN based carbon fiber and/or the reinforcing fibers comprise non-woven fibers.

7. The reinforced composite substrate according to any of the preceding claims, wherein the reinforced composite substrate comprises a body panel for an automobile.

8. A sheet molding compound comprising
about 50 weight percent reinforcing fibers comprising about 40 weight percent carbon fibers and about 60 weight percent glass fibers, and
" about 50 weight percent thermosetting resin; and
wherein the carbon fibers comprises 12K tow fiber having an average fiber length of about one inch (2.54 cm), the carbon fibers and glass fibers are randomly distributed within the sheet molding compound, the tensile strength of the sheet molding compound is greater than about 170 MPa, the tensile modulus of the sheet molding compound is greater than about 20 GPa, and the specific gravity of the sheet molding compound is less than about 1.60.

9. The sheet molding compound according to claim 8, wherein the thermosetting resin comprises at least one member selected from the group consisting of a vinyl ester resin, a polyester resin, a urethane resin, a phenolic resin, an alkyd resin, an amino resin, an epoxide resin, a silicone resin, and mixtures thereof.

10. The sheet molding compound according to claim 8 or 9, wherein the glass fibers comprise standard yield glass fiber, the carbon fibers comprise PAN based carbon fiber and/or the reinforcing fibers comprise non-woven fibers.

11. A method of forming a composite structural component comprising:
providing glass fibers of about 1 inch (2.54 cm) length,
providing 12 K tow carbon fibers of about 1 inch (2.54 cm) length,
forming a mat of randomly distributed glass and carbon fibers,
contacting a thermosetting resin with the mat to form a resinated mat;
compacting the resinated mat to form an uncured sheet;
molding and cutting the uncured sheet to the desired shape and size;
curing the uncured sheet to form the composite structural component,
wherein the tensile strength of the composite structural component is greater than about 170 MPa, the tensile modulus of the composite structural component is greater than about 20 GPa, and the specific gravity of the composite structural component is less than about 1.60, and
wherein the combined carbon fibers and glass fibers are present in a 50:50 weight ratio to the thermosetting resin, and the carbon fibers and the glass fibers present in a 40:60 ratio by weight to one another.

12. The method according to claim 11, wherein the carbon fibers comprise PAN based carbon fibers and/or the glass fiber comprises standard yield glass fiber.

13. The method according to claim 11 or 12, wherein the thermosetting resin comprises a resin composition comprising at least one member selected from the group consisting of a vinyl ester resin, a polyester resin, a urethane resin, a phenolic resin, an alkyd resin, an amino resin, an epoxide resin, a silicone resin, and mixtures thereof.

14. The method according to any of the claims 11 to 13, wherein the composite structural component comprises about 50 weight percent carbon fibers and glass fibers, and about 50 weight percent thermosetting resin.

15. The method according to any of the claims 11 to 14, wherein the carbon fibers and the glass fibers are present in the composite structural component in a ratio by weight of about 40:60.

## Patentansprüche

1. Ein verstärktes Verbundsubstrat mit
etwa 50 Gewichts % eines wärmeaushärtenden Harzes; und
etwa 50 Gewichts % verstärkenden Fasern,
wobei die verstärkenden Fasern Karbonfasern und Glasfasern in einem Gewichtsverhältnis von 40:60 aufweisen und die Karbonfasern 12K Zugfasern mit einer durchschnittlichen Faserlänge von etwa einem Inch (2,54 cm) haben.

2. Das verstärkte Verbundsubstrat nach Anspruch 1, wobei die Zugspannung des verstärkten Verbundsubstrats größer ist als etwa 170 MPa.

3. Das verstärkte Verbundsubstrat nach Anspruch 1 oder 2, wobei der Spannungsmodul des verstärkten Verbundsubstrats größer ist als etwa 20 Gpa.

4. Das verstärkte Verbundsubstrat nach einem der vorangehenden Ansprüche, wobei das spezifische Gewicht des verstärkten Verbundsubstrats geringer ist als 1,60.

5. Das verstärkte Verbundsubstrat nach einem der vorangehenden Ansprüche, wobei das Harz wenigstens einen Bestandteil, der aus der Gruppe bestehend aus einem Duroplastharz, einem Venylesterharz, einem Polyesterharz, einem Urethanharz, einem phenolischen Harz, einem Alkydharz, einem Aminoharz, einem Epoxidharz, einem Silikonharz und Mischungen aus diesen besteht, aufweist.

6. Das verstärkte Verbundsubstrat nach einem der vorangehenden Ansprüche, wobei die Glasfasern eine standardmäßig anfallende Glasfaser ist, die Karbonfaser eine auf PAN basierende Karbonfaser ist und/oder die Verstärkungsfasern nicht-verwebte Fasern beinhalten.

7. Das verstärkte Verbundsubstrat nach einem der vorangehenden Ansprüche, wobei das verstärkte Verbundsubstrat ein Karosserieteil für ein Automobil bildet.

8. Eine ein Blatt bildende Verbindung mit
50 Gewichts % Verstärkungsfasern, die etwa 40 Gewichts % Karbonfasern und etwa 60 Gewichts % Glasfasern aufweisen, und
etwa 50 Gewichts % eines wärmeaushärtenden Harzes; und
wobei die Karbonfasern 12 K Zugfasem mit einer durchschnittlichen Faserlänge von etwa einem Inch (2,54 cm) haben, die Karbonfasern und die Glasfasern willkürlich in der die Platte bildenden Verbindung verteilt sind, die Zugspannung der das Blatt bildenden Verbindung größer ist als etwa 170 MPa, der Spannungsmodul des Blatts bildenden Verbindung größer ist als etwa 20 Gpa und das spezifische Gewicht der das Blatt bildenden Verbindung geringer ist als etwa 1,60.

9. Die ein Blatt bildende Verbindung nach Anspruch 8, wobei das wärmeaushärtende Harz wenigstens einen Bestandteil aufweist ausgewählt aus der Gruppe bestehend aus einem Venylesterharz, einem Polyesterharz, einem Urethanharz, einem phenolischen Harz, einem Alkydharz, einem Aminoharz, einem Epoxidharz, einem Silikonharz und Mischungen aus diesen.

10. Die ein Blatt bildende Verbindung nach Anspruch 8 oder 9, wobei die Glasfasern eine üblicherweise anfallende Glasfaser aufweist, die Kohlefasern auf PAN basierenden Kohlefasern aufweisen und/oder die Verstärkungsfasern nicht verbogene Fasern aufweisen.

11. Ein Verfahren zum Bilden einer strukturellen Verbundkomponente, mit
Bereistellen von Glasfasern in einer Länge von ungefähr 1 Inch (2,54 cm),
Bereitstellen von 12 K Zugkohlefasern mit einer Länge von etwa 1 Inch (2,54 cm),
Bilden einer Matte aus zufällig verteilten Glas- und Karbonfasern,
Kontaktieren eines wärmeaushärtenden Harzes mit der Matte unter Bildung einer geharzten Matte;
Zusammenpressen der geharzten Matte unter Bildung eines ungehärteten Blatts;
Formen und Schneiden des ungehärteten Blatts in die gewünschte Form und Größe;
Aushärten des ungehärteten Blatts unter Bildung der strukturellen Verbundkomponente;
wobei die Zugspannung der strukturellen Verbundkomponente größer ist als 170 MPa, der Spannungsmodul der strukturellen Verbundkomponente größer ist als etwa 20 GPa und das spezifische Gewicht der strukturellen Verbundkomponente geringer ist als 1,60, und
wobei die kombinierten Karbonfasern und Glasfasern in einem Gewichtsverhältnis von 50:50 zu dem wärmeaushärtenden Harz vorliegen und die Verbundfasern und die Glasfasern in einem Gewichtsverhältnis von 40:60 zueinander vorliegen sind.

12. Das Verfahren nach Anspruch 11, wobei die Karbonfasern auf PAN beruhende Karbonfasern und/oder die Glasfasern üblich anfallende Glasfasern aufweisen.

13. Das Verfahren nach Anspruch 11 oder 12, wobei der wärmeaushärtende Harz eine Harzzusammensetzung aufweist, die wenigstens einen Bestandteil aufweisen ausgewählt aus der Gruppe bestehend aus einem Venylesterharz, einem Polyesterharz, einem Urethanharz, einem phenolischen Harz, einem Alkydharz, einem Aminoharz, einem Epoxidharz, einem Silikonharz und Mischungen aus diesen.

14. Das Verfahren nach einem der Ansprüche 11 bis 13, wobei die strukturelle Verbundkomponente wenigstens 50 Gewichts % Karbonfasern und Glasfasern und etwa 50 Gewichts % eines wärmeaushärtenden Harzes aufweist.

15. Das Verfahren nach Anspruch nach einem der Ansprüche 11 bis 14, wobei die Karbonfasern und die Glasfasern in der zusammengesetzten Verbundkomponente in einem Gewichtsverhältnis von etwa 40:60 vorliegen.

## Revendications

1. Substrat composite renforcé comprenant
environ 50% en poids d'une résine thermodurcissable ; et
environ 50% en poids de fibres de renfort,
dans lequel les fibres de renfort comprennent une fibre de carbone et des fibres de verre présentes dans un rapport de 40:60 en poids, et la fibre de carbone comprend une fibre résistante à 12K ayant une longueur moyenne de fibre d'environ un pouce (2,54 cm).

2. Substrat composite renforcé selon la revendication 1, dans lequel la résistance à la traction du substrat composite renforcé est supérieure à environ 170 MPa.

3. Substrat composite renforcé selon la revendication 1 ou 2, dans lequel le module d'élasticité en traction du substrat composite renforcé est supérieur à environ 20 GPa.

4. Substrat composite renforcé selon l'une quelconque des revendications précédentes, dans lequel le poids spécifique du substrat composite renforcé est inférieure à environ 1,60.

5. Substrat composite renforcé selon l'une quelconque des revendications précédentes, dans lequel la résine comprend au moins un élément choisi parmi le groupe consistant en une résine thermodurcie, une résine d'ester vinylique, une résine de polyester, une résine d'uréthane, une résine phénolique, une résine d'alkyde, une résine amino, une résine d'époxyde, une résine de silicone, et des mélanges de celles-ci.

6. Substrat composite renforcé selon l'une quelconque des revendications précédentes, dans lequel la fibre de verre comprend une fibre de verre à rendement standard, la fibre de carbone comprend une fibre de carbone à base de PAN et/ou les fibres de renfort comprennent des fibres non tissées.

7. Substrat composite renforcé selon l'une quelconque des revendications précédentes, dans lequel le substrat composite renforcé comprend un panneau de carrosserie pour une automobile.

8. Composé à mouler en feuille comprenant
environ 50 pour cent en poids de fibres de renfort comprenant environ 40 pour cent en poids de fibres de carbone et environ 60 pour cent en poids de fibres de verre, et
environ 50 pour cent en poids d'une résine thermodurcissable ; et
dans lequel les fibres de carbone comprennent une fibre résistante à 12K ayant une longueur moyenne de fibre d'environ un pouce (2, 54 cm), les fibres de carbone et les fibres de verre sont réparties aléatoirement au sein du composé à mouler en feuille, la résistance à la traction du composé à mouler en feuille est supérieure à environ 170 MPa, le module d'élasticité en traction du composé à mouler
en feuille est supérieur à environ 20 GPa, et la densité du composé à mouler en feuille est inférieure à environ 1,60.

9. Composé à mouler en feuille selon la revendication 8, dans lequel la résine thermodurcissable comprend au moins un élément choisi parmi le groupe consistant en une résine d'ester vinylique, une résine de polyester, une résine d'uréthane, une résine phénolique, une résine d'alkyde, une résine amino, une résine d'époxyde, une résine de silicone, et des mélanges de celles-ci.

10. Composé à mouler en feuille selon la revendication 8 ou 9, dans lequel les fibres de verre comprennent une fibre de verre à rendement standard, les fibres de carbone comprennent une fibre de carbone à base de PAN et/ou les fibres de renfort comprennent des fibres non tissées.

11. Procédé de formation d'un composant structurel composite comprenant :
la fourniture de fibres de verre d'une longueur d'environ un pouce (2,54 cm),
la fourniture de fibres de carbone de résistance à la rupture de 12K d'une longueur d'environ un pouce (2,54 cm),
la formation d'un mat de fibres de verre et de carbone réparties aléatoirement,
la mise en contact d'une résine thermodurcissable avec le mat pour former un mat résiné ;
le compactage du mat résiné pour former une feuille non durcie ;
le moulage et la découpe de la feuille non durcie à la forme et à la taille désirées ;
le durcissement de la feuille non durcie pour former le composant structurel composite,
dans lequel la résistance à la traction du composant structurel composite est supérieure à environ 170 MPa, le module d'élasticité en traction du composant structurel composite est supérieur à environ 20 GPa, et le poids spécifique du composant structurel composite est inférieure à environ 1,60, et
dans lequel les fibres de carbone et les fibres de verre combinées sont présentes dans un rapport en poids de 50:50 par rapport à la résine thermodurcissable, et les fibres de carbone et les fibres de verre présentes dans un rapport en poids de 40:60 les unes par rapport aux autres.

12. Procédé selon la revendication 11, dans lequel les fibres de carbone comprennent des fibres de carbone à base de PAN et/ou la fibre de verre comprend une fibre de verre à rendement standard.

13. Procédé selon la revendication 11 ou 12, dans lequel la résine thermodurcissable comprend une composition de résine comprenant au moins un élément choisi parmi le groupe consistant en une résine d'ester vinylique, une résine de polyester, une résine d'uréthane, une résine phénolique, une résine d'alkyde, une résine amino, une résine d'époxyde, une résine de silicone, et des mélanges de celles-ci.

14. Procédé selon l'une quelconque des revendications 11 à 13, dans lequel le composant structurel composite comprend environ 50 pour cent en poids de fibres de carbone et de fibres de verre, et environ 50 pour cent en poids de résine thermodurcissable.

15. Procédé selon l'une quelconque des revendications 11 à 14, dans lequel les fibres de carbone et les fibres de verre sont présentes dans le composant structurel composite dans un rapport en poids d'environ 40:60.
